# EUROPEAN PATENT APPLICATION

(11) **EP 1 239 367 A1**
(43) Date of publication of application: **11.09.2002**
(21) Application number: 01130838.4
(22) Date of filing: 27.12.2001
(51) Int. Cl.: G06F 9/445

(54) **Electronic system having modular expansion function facilities**

(30) Priority: 29.12.2000 EP 00830874
(71) Applicant: STMicroelectronics S.r.l., 20041 Agrate Brianza (Milano) (IT)
(72) Inventor: Borgatti, Michele, 41035 Finale Emilia (Modena) (IT); Navoni, Loris Giuseppe, 20063 Cernusco sul Naviglio (Milano) (IT); Rolandi, Pierluigi, 15059 Monleale (Alessandria) (IT)
(74) Representative: Ferreccio, Rinaldo

(57) **Abstract**

The invention relates to an electronic system with modular expansion of its functions, which is of a type comprising a portable host electronic device (1) associated with an expansion module (8) adapted for quick-connect engagement and disengagement in/from the portable device (1), characterized in that the module (8) comprises the following components:
- a series of peripheral devices (16) adapted to serve different classes of functions;
- a non-volatile memory (17) storing information that pertains to configuring the different functions in the module (8);
- a re-configurable device (18) adapted to establish connections, implement functional portions, and control all the system components;
- a control device (19) adapted to cooperate with the host device (1) in guiding the steps for re-configuring the whole system; and
- a software algorithm adapted to instruct the system to reconfigure itself on which function and with which characteristics.

## Description

### Field of Application

The present invention relates to an electronic system with modular expansion of its functions.

### Prior Art

As is well known, the capabilities afforded by palm-top computers is a broadening field in which a fresh potential for expansion has been brought by the development of supplementary modules, with different forms and functions, which add to the basic range of functions of such computers. The modules are designed for attachment and quick connection to portable electronic devices. The following models, among others, provide examples of such modules that are available commercially: Sony Memory Stick, Multimedia Card, Handspring Springboard, etc.

A supplementary module usually consists of an expansion board providing a single additional function. Representative of such additional functions are an expanded memory, MP3 players, digital cameras, digital recorders, and GPS sets.

Briefly, a user who wishes to use a new function of his/her choice is to substitute a board with a new one.

Furthermore, some peripherals resident in these expansion boards may have a range of different functions that would more conveniently be consolidated in one board. This is the case, for example, with a multifunction digital camera designed for operation as a still and TV camera, to recognize features, and track moving objects. The addition of a microphone to such a camera would be useful to supplement it with a function such as digital recording, voice recognition, or vocal commanding for automatic dictation.

Thus, supplementing a portable electronic device of any description with one or more function classes would make the device more versatile and expand its potential. Currently available are diary, calculation, communication, scheduling and other functions for devices not larger than the palm of a hand, like palmar computers, hand-held computers, mobile phones, and organizers.

For example, a palm-top computer could be inserted a multimedia function board for game playing, and this board be removed and replaced with another providing the function needed for operating the palm-top computer in business applications.

A critical factor to these palm-top devices is the user interfacing mode. For the available functions to be readily set to work by the user, it is necessary that the user be enabled to grasp the essentials for their activation without having to go through lengthy training sessions. This because, unlike standard computers, these devices are often to interact with a distracted user, as may be the case of a cellular phone being operated in a crowded railway station, or are required to respond promptly, as when vocal or written notes are to be entered. Having to allow some minutes for the system to re-initialize, as is often necessary with desk computers, would be unthinkable in such circumstances.

In this context, to be able to call an application or to enter a sequence of data by voice messages would certainly make such palm-top devices quicker and more convenient to use.

A prior approach to providing these features is disclosed in US Patent No. 5,602,963, where a so-called personal organizer is described that can be commanded vocally.

Additionally to ease of activation and control, the industry of palm-top electronic devices pursues expansion of the functions of a generic support system that affords a number of discrete functions within a limited area. However, a user's demand is that any added functions should be readily identifiable, quick to install, and operable at will with no overlap of the support system.

An approach of this kind is described in US Patent No. 5,432,938, which provides a method of automatically activating a functional expansion module by insertion into a computer unit.

The present invention is related to the above-outlined field, and primarily directed to provide a method of managing supplementary modules to a palm-top type of base device.

Another prior solution is described in US Patent No. 6,029,211, wherein a computer card incorporates a number of functions such as an additional memory, a modem, and circuitry for accessing a local network (LAN). This card can be activated by an external event suitably addressing a configuration circuit portion known as CIS (Card Information Structure).

However, the above card is not intended for palm-top computers, and cannot even adapted for that use.

A further prior proposal comes from US Patent No. 6,038,551, which does relate to a multi-functional card but only in connection with one class of functions, such as secured transaction encoding and decoding.

The last-mentioned card, although advantageous on several counts, does not provide for the system consisting of the combined portable electronic device and expansion module to be configured such that a user is allowed to activate a different function.

The underlying technical problem of this invention is to provide an electronic system with modular expansion of its functions, particularly a portable one, with structural and functional features appropriate to make the function expanding step re-configurable for immediate avail of predetermined applications, not originally provided in the support system, thereby overcoming the limitations of the prior art.

### Summary of the Invention

The principle on which the present invention stands is one of providing a modular expansion system whose modules incorporate a range of functions to be activated on user's request by re-configuring the system hardware. Re-configuration is achieved using software tools.

Based on this principle, the technical problem is solved by a system as previously indicated and as defined in Claim 1 foll..

The features and advantages of the system according to this invention will be apparent from the following detailed description of an embodiment thereof, given by way of non-limitative example with reference to the accompanying drawings.

In the drawings:

### Brief Description of the Drawings

Figure 1 is a block diagram showing schematically the construction of the host electronic device and a functional expansion module.
Figure 2 schematically details the construction of a module associated with a host electronic device.
Figure 3 is a general perspective view of a system according to the invention.

### Detailed Description

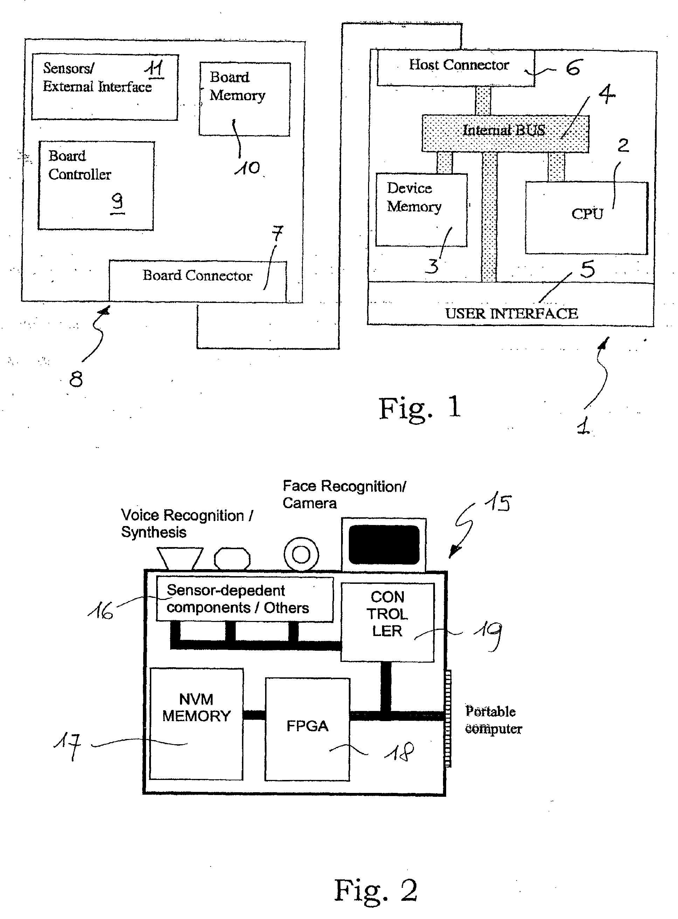

With reference to the drawings, in particular to the example shown in Figure 1, a portable, e.g. palm-top, type of host electronic device operated in accordance with the invention is shown generally at 1 in schematic form.

The device 1 may be a wrist organizer, a cellular phone, or a palm-top computer, such as the "Visor" model sold by Handspring, which comes with the OS operating system installed.

Advantageously, the device 1 includes a microprocessor 2 and a memory unit 3. These internal components are interconnected by an internal bus 4, which also connects in a user interface 5.

The device 1 further includes a connector 6, which is adapted for quick engagement with a mating connector 7 on a module 8, and structurally separated from the device 1.

The module 8 is essentially an expansion board adapted to expand the functions of the device 1, and adapted for releasable connection to the device 1 by plugging the connectors 6 and 7 together.

The module 8 includes at least a microcontroller 9 and a memory 10. Ambient interface sensors 11 are also provided. Components 9, 10 and 11 are interconnected by an internal bus of the module 8, which bus may be provided by printed circuit tracks on the expansion board.

To better explain the various aspects of this invention, the device 1 will be assumed to be a generic palm-top computer, and the expansion board to be a module adapting the device 1 for vocal command acceptation.

In this invention, the expansion module 8 includes a board 15 comprising the following components:
- a series of devices 16 directed to serve different classes of functions (e.g., a series of sensors, signal processors, converters, etc.), hereinafter referred to as the peripherals;
- a non-volatile memory 17 storing information that pertains to configuring the different functions in the board;
- a re-configurable device 18, e.g. of the FPGA type, adapted to establish connections, implement functional portions, and control all the system components;
- a control device 19 adapted, in cooperation with the host device 1, to guide the steps for re-configuring the whole system; and
- a software algorithm adapted to instruct the system to re-configure itself on which function and with which characteristics.

The board 15 is operated by a method that, on request by the user, allows the board to be re-configured in real time to produce a desired function.

Note should be made of that the board components may be fabricated in one chip, e.g. using a System-on-Chip technology, or alternatively, be scattered among a few integrated devices.

Furthermore, the board structure can be scaled with respect to:
- the number of available peripherals;
- the size of the re-configurable devices, which settles the number and types of functions that can be activated at any one time; and
- the size of the non-volatile memory, which settles the availability of more complex drivers.

The peculiar aspect of the system according to this invention resides in that it does not provide a mere aggregate of wired functions from which the user is prompted to make his/her choice.

In fact, the system of this invention comprises a series of peripherals and (at least one) set of re-configurable blocks, which modify the system hardware to produce a desired function, whether the latter is predefined in the board 15 or run-time requested.

A new function is activated by the following sequence:
- assume a multi-functional board connected physically to the host device 1 using a PCMCIA connection, for example;
- within this board, different configurations can be activated, whose images are stored in the system non-volatile memory, or alternatively can be dumped off the host device through a suitable communication channel;
- the operating system of the host device is able, through a suitable API (Application Programming Interface), to signal requests from the current application to the board, and to manage the in/out going traffic;
- a request to activate a new function is made by the user, or responds to the host device changing its state; for instance, upon a new application being activated that requires a different interface, the host device controls the expansion board to activate that interface; and
- the control device and its driver are activated on request to match the function(s) requested; this step comprises the following sub-steps:

- verifying the request, to check it for correctness and consistency with the functions provided by the board;
- selecting and activating peripherals and other affected components, and de-activating the unnecessary ones to also afford energy savings;
- configuring the communication buses, and resetting the board to suit the functions requested;
- addressing the memory space that contains the instructions to execute the drivers that pertain to the function requested; and
- signalling completion of the re-configuration.

The software algorithm that is resident in the host device (or if stored in a memory of the expansion board, processable by the host device) is activated to set the communication protocol, and signals the availability of the requested function to the current application (or straight to the user).

Consider now an expansion board with SoC technology, whereby the vocal command recognition or voice synthesis function can be actuated.

A system according to the invention which also incorporates a board as above, would comprise the following essential components:
- a voice synthesizing peripheral (or converter);
- a voice recognition peripheral (as well as a microphone sensor);
- a microcontroller;
- a volatile memory, preferably a RAM type, and a non-volatile memory, preferably a flash type; and
- one or more FPGA or the like devices (e.g. CPLD).

This board fits into a palm-top computer, and upon insertion, will perform the following operations:
- read the resident applications, and verify that the added functions are applicable to the individual applications; and
- wait for a request to re-configure; once the user's or system request is executed, the board will activate the processor and re-configurable devices according to a currently activated application, thereby making the functions available; according to the application, or within the application in different modules, it may happen that only the voice synthesizing function (as in the instances of an e-book or a mail reader), or only the vocal command acquiring function (as in the instance of a game), or both are requested.

In the last-mentioned case, an intermediate status could be considered, e.g. with FPGAs configured for either occurrences and adapted to switch between functions on each request from the application.

If the current application is designed to use these functions, activation would occur at once; if not, an interaction of the board with the host computer should be established to enable the application structures to serve as function activators.

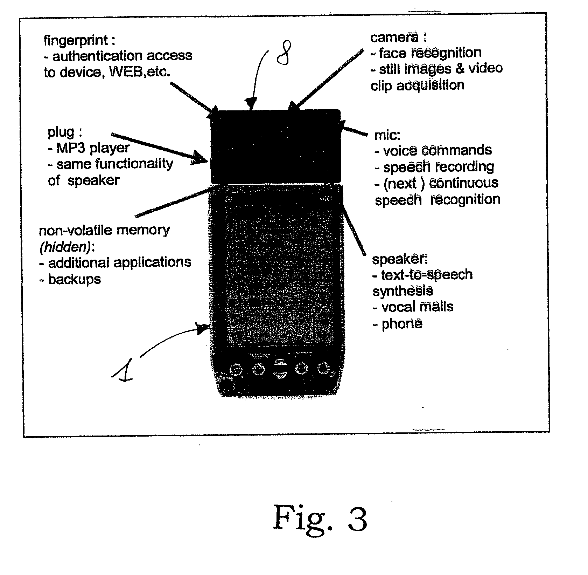

In this case, according to the diagram of Figure 3, the vocal command function could be activated by merely inserting a pertinent board into the expansion slot. The board itself would be able to verify through the applications where it can set its functions to work, configure the system to accept vocal commands, and control the palm-top computer applications consistently with the vocal commands imparted, and this without the user having to enter any special configuration.

Also, it would be possible to store up both the configuration and the current state, such that the system will be quickly set up at the next insertion of a board.

Removal and replacement of the above board with another having a different function, such as a feature recognizer, initiate a palm-top computer re-configuring step according to the characteristics of the new board.

## Claims

1. An electronic system with modular expansion of its functions, being of a type which comprises a portable host electronic device (1) associated with an expansion module (1) adapted for quick-connect engagement in and disengagement from the portable device (1), **characterized in that** said module (8) comprises the following components:
- a series of peripheral devices (16) adapted to serve different classes of functions;
- a non-volatile memory (17) storing information that pertains to configuring the different functions in the module (8);
- a re-configurable device (18) adapted to establish connections, implement functional portions, and control all the system components;
- a control device (19) adapted, in cooperation with the host device (1), to guide the steps for re-configuring the whole system; and
- a software algorithm adapted to instruct the system to re-configure itself on which function and with which characteristics.
